(19) Europäisches Patentamt
European Patent Office
Office européen des brevets

(11) **EP 0 671 061 B1**

(12) **EUROPÄISCHE PATENTSCHRIFT**

(45) Veröffentlichungstag und Bekanntmachung des Hinweises auf die Patenterteilung:
**05.06.1996 Patentblatt 1996/23**

(21) Anmeldenummer: **94901835.2**

(22) Anmeldetag: **22.11.1993**

(51) Int Cl.⁶: **H01R 13/53**

(86) Internationale Anmeldenummer:
**PCT/EP93/03263**

(87) Internationale Veröffentlichungsnummer:
**WO 94/13035 (09.06.1994 Gazette 1994/13)**

(54) **STECKVERBINDUNGSEINRICHTUNG FÜR KABEL**

PLUG-TYPE CONNECTING DEVICE FOR CABLES

DISPOSITIF CONNECTEUR POUR CABLE

(84) Benannte Vertragsstaaten:
**AT CH LI**

(30) Priorität: **26.11.1992 DE 4239648**

(43) Veröffentlichungstag der Anmeldung:
**13.09.1995 Patentblatt 1995/37**

(73) Patentinhaber: **KARL PFISTERER ELEKTROTECHNISCHE SPEZIALARTIKEL GMBH & CO. KG D-70327 Stuttgart (DE)**

(72) Erfinder:
• **BÄUERLE, Gottfried**
  **D-70736 Fellbach (DE)**
• **SANDER, Dieter**
  **D-70619 Stuttgart (DE)**
• **SOBIERAY, Günter**
  **D-70839 Gerlingen (DE)**

(74) Vertreter: **Held, Martin, Dr.-Ing. Patentanwälte Phys. H. Bartels, Dipl.-Ing H. Fink Dr.-Ing. M. Held, Dipl.-Ing. M. Bartels Lange Strasse 51 70174 Stuttgart (DE)**

(56) Entgegenhaltungen:
EP-A- 0 015 558        EP-A- 0 424 699
EP-A- 0 429 734        DE-C- 3 021 845
DE-C- 3 243 690

**Beschreibung**

Die Erfindung betrifft eine Steckverbindungseinrichtung mit einem in eine Steckbuchse einsetzbaren Kabelstecker für isolierte Kabel eines Mittelspannung oder Hochspannung führenden Energieversorgungsnetzes.

Der Erfindung liegt die Aufgabe zugrunde, eine gegenüber den bekannten Steckverbindungseinrichtungen dieser Art verbesserte Steckverbindungseinrichtung zu schaffen, die dennoch kostengünstig und leicht zu handhaben ist. Diese Aufgabe löst eine Steckverbindungseinrichtung mit den Merkmalen des Anspruches 1.

Bei den Steckverbindungseinrichtungen der in Rede stehenden Art hat der eine konische Außenmantelfläche aufweisende Dichtungskörper des Kabelsteckers die Aufgabe, die Steckbuchse sowohl mechanisch als auch elektrisch dicht zu verschließen, wobei unter einem dichten Verschluß verstanden wird, daß keine Kriechströme vom Kontaktkörper der Steckbuchse zu dem auf Erdpotential liegenden Gehäuse des Kabelsteckers oder der die Steckbuchse tragenden, ebenfalls geerdeten Gehäusewand auftreten können und auch Überschläge zwischen diesen Teilen mit Sicherheit verhindert werden. Bei den bekannten Steckverbindungseinrichtungen ist aber nicht gewährleistet, daß zwischen der konischen Außenmantelfläche des Isolierkörpers und der konischen Innenwand der Steckbuchse beim Einsetzen des Kabelsteckers in die Steckbuchse Lufteinschlüsse vermieden werden, selbst wenn der Konuswinkel der Außenmantelfläche des Isolierkörpers kleiner gewählt ist als der Konuswinkel der konischen Innenmantelfläche der Steckbuchse und deshalb der Isolierkörper fortschreitend von dem im Durchmesser kleineren Ende gegen das im Durchmesser größere Ende hin in Anlage an die Buchseninnenwand kommt. Solche Lufteinschlüsse können zu Teilentladungen führen, welche die Qualität der elektrischen Dichtung, welche der Isolierkörper bewirken soll, deutlich reduzieren können. Bei der erfindungsgemäßen Steckverbindungseinrichtung sind solche Teilentladungen ausgeschlossen, weil selbst dann, wenn es beim Einführen des Kabelsteckers in die Steckbuchse zu Lufteinschlüssen zwischen der Außenmantelfläche des Isolierkörpers und der Innenwand der Steckbuchse kommt, diese nicht störend in Erscheinung treten können, weil der Druck, mit dem die Außenmantelfläche des Isolierkörpers an die Innenwand der Steckbuchse gepreßt wird, bei der erfindungsgemäßen Härte des Dichtungskörpers dazu führt, daß die Luft in das Innere des Dichtungskörpers eindringt. Da der erforderliche Anpreßdruck zwischen dem Isolierkörper und der Buchseninnenwand relativ gering ist, ist auch die in Steckerlängsrichtung aufzubringende Kraft beim Herstellen der Steckverbindung noch in einem Bereich, der eine gute Handhabbarkeit des Kabelsteckers gewährleistet.

Der Konuswinkel der Außenmantelfläche des Isolierkörpers und der konischen Innenmantelfläche der Steckbuchse wird vorzugsweise gemäß den Ansprüchen 2 und/oder 3 gewählt, da hiermit besonders günstige Verhältnisse hinsichtlich der Dichtungswirkung des Isolierkörpers und der bei der Handhabung des Kabelsteckers aufzubringenden Kräfte erreicht werden.

Auch die übrigen Unteransprüche haben vorteilhafte Ausgestaltungen der erfindungsgemäßen Steckverbindungseinrichtung zum Gegenstand.

Ausführungsbeispiele

Im folgenden ist die Erfindung anhand von in beigefügten Zeichnungen dargestellten Ausführungsbeispielen im einzelnen erläutert. Es zeigen

Fig. 1     einen Längsschnitt eines ersten Ausführungsbeispieles im montierten Zustand,

Fig. 2     einen Längsschnitt eines zweiten Ausführungsbeispieles im montierten Zustand,

Fig. 3     einen Längsschnitt eines dritten Ausführungsbeispieles im montierten Zustand,

Fig. 4     einen unvollständig und vergrößert dargestellten Längsschnitt eines Dichtungskörpers für das Ausführungsbeispiel gemäß Fig. 3,

Fig. 5     einen Längsschnitt des Dichtungskörpers eines abgewandelten Ausführungsbeispieles,

Fig. 6     ein Diagramm für die mit dem Dichtungskörper erzielbare Spannungsfestigkeit in Abhängigkeit von der Anpreßkraft sowie in Abhängigkeit von der Härte des Materials des Isolierkörpers,

Fig. 7     einen Längsschnitt eines dritten Ausführungsbeispieles einer Steckbuchse für einen erfindungsgemäßen Kabelstekker,

Fig. 8     eine Draufsicht auf eine vierte Ausführungsform einer Steckbuchse für einen erfindungsgemäßen Kabelstecker,

Fig. 9     einen Schnitt nach der Linie IX - IX der Fig. 8.,

Fig. 10    einen Schnitt nach der Linie X - X der Fig. 8.

Fig. 11    einen Längsschnitt einer fünften Ausführungsform der erfindungsgemäßen Steckverbindungseinrichtung,

Fig. 12    einen Längsschnitt des Buchsengehäuses einer Abwandlung der Steckerbuchse gemäß Fig. 11,

Fig. 13      eine Frontansicht des Buchsengehäuses gemäß Fig. 12.

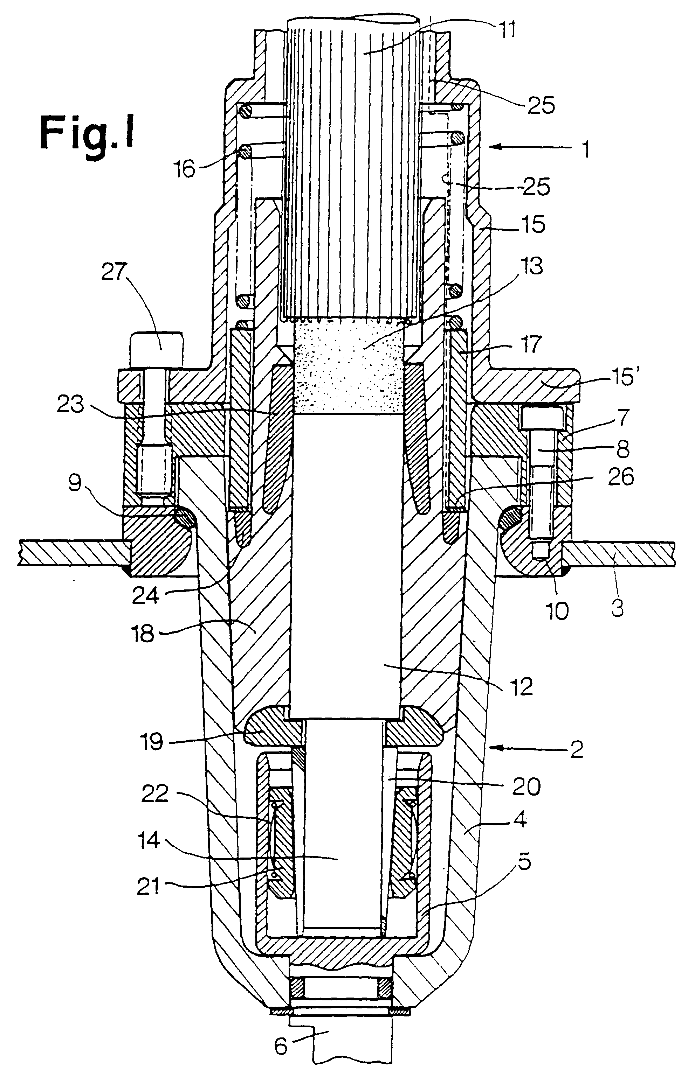

Das in Fig. 1 dargestellte erste Ausführungsbeispiel der erfindungsgemäßen Steckverbindungseinrichtung weist einen als Ganzes mit 1 bezeichneten Kabelstecker und eine als Ganzes mit 2 bezeichnete Steckbuchse auf, in welche der Kabelstecker 1 einsteckbar ist. Die Steckbuchse 2 ist an der Wand 3 eines elektrischen Gerätes, beispielsweise einer Schaltanlage, festgelegt und ragt durch eine Öffnung der Wand 3 in das Innere des Gerätes. Die Steckbuchse 2 weist ein becherförmiges Buchsengehäuse 4 aus Gießharz oder einem anderen Isolierstoff auf, in dessen Innerem eine becherförmige Kontaktbuchse 5 angeordnet ist. Der Boden der gleichachsig zum Buchsengehäuse 4 angeordneten Kontaktbuchse 5 schließt sich an den Boden des Buchsengehäuses 4 an, der abgedichtet von einem die Kontaktbuchse 5 tragenden Verbindungsbolzen 6 durchdrungen wird. Ein Klemmring 7 drückt mit Hilfe von Schrauben 8 den außerhalb der Wand 3 liegenden Rand des Buchsengehäuses 4 unter Zwischenlage eines Dichtungsringes 9 gegen einen fest und dicht mit der Wand 3 verbundenen Tragring 10.

Für das Anbringen des Kabelsteckers 1 an ein isoliertes, einadriges Kabel 11 für eine Stromstärke von beispielsweise 300 Ampere und eine Betriebsspannung von beispielsweise 10 kV wird der Kabelmantel auf einem Abschnitt vorbestimmter Länge entfernt. Sodann werden die innerhalb des Kabelmantels liegenden Schirmdrähte über den Kabelmantel zurückgebogen. Weiterhin wird die sich auf der Kunststoffisolation 12 befindende Leitschicht 13 so weit entfernt, daß sie nur noch, wie Fig. 1 zeigt, ein kurzes Stück über das Ende des Kabelmantels übersteht. Schließlich wird noch ein Endabschnitt des Leiters 14 des Kabels 11 von der Kunststoffisolation 12 befreit.

Der Kabelstecker 1 besteht aus einer metallischen Kappe 15, einer Schraubendruckfeder 16, die sich einerseits an einer Schulter der Kappe 15 und andererseits an einer Druckhülse 17 aus elektrisch isolierendem Material abstützt, sowie aus einem Isolierkörper 18. Das Material des Isolierkörpers 18 ist ein Silikonkautschuk mit einer Shore-A-Härte zwischen 25 und 30. Weiterhin gehört zu dem Kabelstecker 1 ein metallischer Druckring 19, eine in Längsrichtung mehrfach geschlitzte, metallische Klemmhülse 20, welche auf das abisolierte Ende des Leiters 14 aufgeschoben wird, und ein Kontaktträger 21 mit einem Viellinienkontaktelement 22.

Wie Fig. 1 zeigt, hält die Klemmhülse 20 den Druckring 19 in Anlage an der Stirnfläche der Kunststoffisolation 12. Der Kontaktträger 21 wird auf die außen konische Klemmhülse 20 aufgepreßt, wodurch diese auf dem Leiter 14 und der Kontaktträger 21 auf der Klemmhülse 20 festgeklemmt werden.

Ehe der Druckring 19, die Klemmhülse 20 und der Kontaktträger 21 montiert werden, werden über das Kabel die Kappe 15 und die Schraubendruckfeder 16 geschoben. Sodann wird der Isolierkörper 18 aufgeschoben, in den ein Feldsteuerkörper 23 eingebettet ist, welcher entweder aus elektrisch leitendem Silikonkautschuk besteht oder mit einer elektrisch leitenden Schicht bedeckt ist. Wie Fig. 1 zeigt, übergreift das hintere Ende des hohlzylindrischen Isolierkörpers 18 die zurückgebogenen Schirmdrähte, und der Feldsteuerkörper 23 kontaktiert die auf Erdpotential liegende Leitschicht 13. Im übrigen liegt der Isolierkörper 18 dicht an der Außenmantelfläche der Kunststoffisolation 12 an und stützt sich am Druckring 19 an. Der bei eingestecktem Kabelstekker in das Buchsengehäuse 4 eingreifende Endabschnitt des Isolierkörpers 18 bildet einen Außenkonus, welcher bei eingestecktem Kabelstecker 1 an die einen korrespondierenden Innenkonus bildende Innenwand des Buchsengehäuses 4 mechanisch und elektrisch dicht angepreßt wird. Der Anpreßdruck liegt im Bereich zwischen etwa 18 N/cm$^2$ und 20 N/cm$^2$, wobei der niedrigere Wert für kleine Kabelstecker und der obere Wert für große Kabelstekker verwendet wird. Der Konuswinkel liegt im Bereich vom 2° bis 3°.

Die Kraft, mit welcher der Isolierkörper 18 in das Buchsengehäuse 4 und damit gegen dessen Innenwand gepreßt wird, wird von der vorgespannten Schraubendruckfeder 16 erzeugt, die einen Abschnitt des Isolierkörpers 18 übergreift, dessen Durchmesser kleiner ist als der Außendurchmesser des außen konischen Abschnittes. Die Druckhülse 17 wird gegen eine Schulter des Isolierkörpers 18 gedrückt, von der aus eine Ringnut in den Isolierkörper 18 eindringt, welche eine Ringelektrode 24 aufnimmt, die kapazitiv an den Leiter 14 des Kabels angekoppelt ist. Diese Ringelektrode 24 besteht aus einem elektrisch leitenden Silikonkautschuk oder einem mit einer leitfähigen Schicht überzogenen Ringkörper aus diesem Material. Die Ringelektrode 24 wird von einem Kontaktring 26 kontaktiert, an den eine Signalübertragungsleitung 25 angelötet ist, welche durch das offene Ende der Kappe 15 herausgeführt ist. Die Ringelektrode 24 liefert ein der Betriebsspannung des Kabels proportionales Signal.

Wie Fig. 1 zeigt, ist die Kappe 15 mit einem Ringflansch 15' versehen. Der Kabelstecker 1 wird so tief in das Buchsengehäuse 4 eingeführt, daß der Flansch 15' am Klemmring 7 anliegt. In dieser Lage wird er durch Schrauben 27 gehalten, bis die Steckverbindung wieder getrennt werden muß.

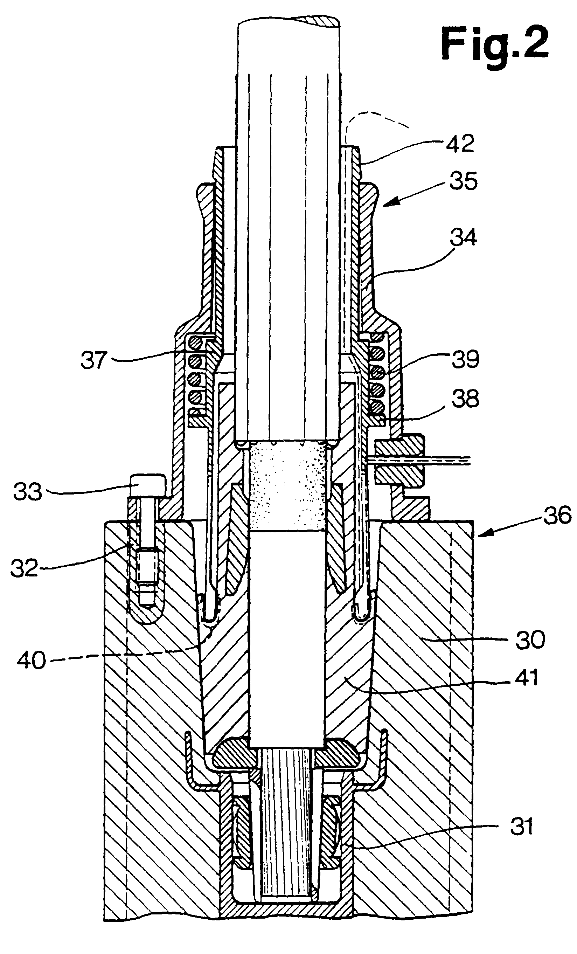

Das in Fig. 2 gezeigte Ausführungsbeispiel einer erfindungsgemäßen Steckverbindungseinrichtung unterscheidet sich von derjenigen gemäß Fig. 1 nur wenig; deshalb sind im folgenden nur die abweichenden Merkmale beschrieben.

Das Buchsengehäuse ist ein dickwandiger Körper aus Gießharz, in den nicht nur die Kontaktbuchse 31 eingebettet ist, sondern auch Gewindebuchsen 32 für den Eingriff der Schrauben 33, mittels deren die metallische Kappe 34 des Kabelsteckers 35 in Anlage an der Stirnfläche des Buchsengehäuses 30 gehalten wird, wenn der Kabelstecker 35 vollständig in die Steckbuchse 36 eingesteckt ist.

Statt der Druckhülse 17 des ersten Ausführungsbeispieles ist eine Mehrzweckhülse 37 aus Kunststoff vorgesehen, die einen nach außen abstehenden Flansch 38 für die Anlage des einen Endes der Druckschraubenfeder 39 aufweist. An den von der Druckschraubenfeder 39 umfaßten Mittelabschnitt der Mehrzweckhülse 37 schließt sich ein auf einem Teil seiner Länge in Längsrichtung mehrfach geschlitzter Endabschnitt an, dessen ringwulstförmiges freies Ende die Ringelektrode 40 gegen den Grund der Ringnut drückt, die von der Schulter des Isolierkörpers 41 aus in diesen eindringt. Über die Ringelektrode 40 wird die Kraft der Schraubendruckfeder 39 auf den außen konischen Endabschnitt des Isolierkörpers 41 übertragen. Wie bei dem Ausführungsbeispiel gemäß Fig. 1 hat der Außenkonus des Isolierkörpers 41 einen Neigungswinkel von etwa 2° bis 3°. Dieser Winkel könnte aber auch größer sein.

An den Mittelabschnitt der Mehrzweckhülse 37 schließt sich andererseits ein Endabschnitt an, welcher aus der Kappe 34 herausgeführt ist. Die über das hintere Ende der Kappe 34 überstehende Endzone 42 hat ein hakenartiges Querschnittsprofil, um das hintere Kappenende übergreifen zu können. Durch dieses Übergreifen wird verhindert, daß sich die Schraubendruckfeder 39 entspannen kann. Sie wird von der Mehrzweckhülse 37 so vorgespannt gehalten, daß der Kabelstecker 35 nahezu vollständig in die Steckbuchse 36 eingeführt werden kann, ehe mittels der Schrauben 33 der Flansch der Kappe 34 entgegen der Kraft der Schraubendruckfeder 39 gegen die Stirnfläche des Buchsenkörpers 30 gezogen wird. Der Kabelstecker 35 muß deshalb nicht von Hand unter Überwindung der Kraft der Schraubendruckfeder 39 in die Steckbuchse 36 eingeführt und mit dieser Kraft so lange gehalten werden, bis die Schrauben 33 in die Gewindebuchsen 32 eingeschraubt sind.

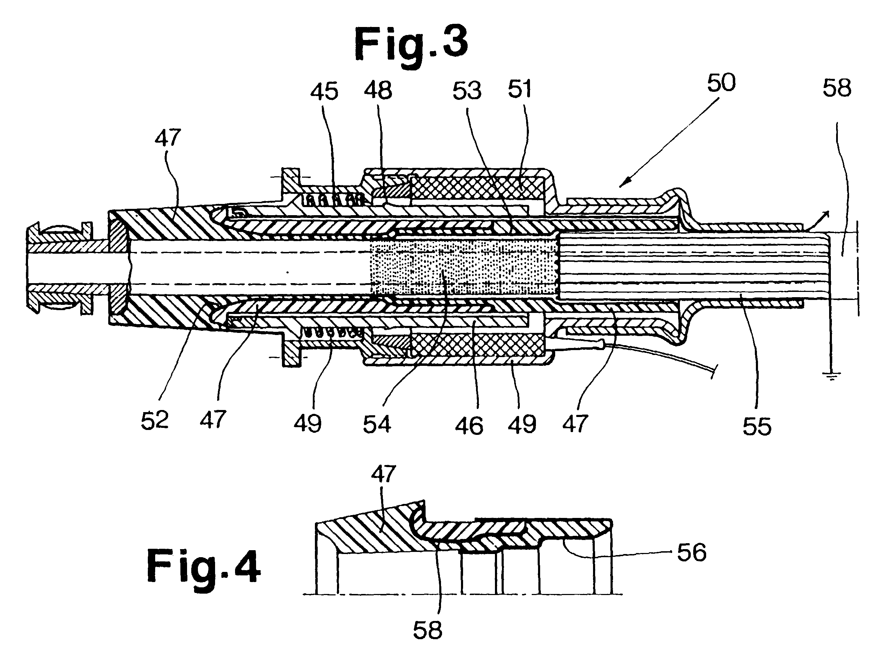

Bei dem in Fig. 3 dargestellten Ausführungsbeispiel einer erfindungsgemäßen Steckverbindungseinrichtung wird der Druck der vorgespannten Schraubenfeder 45 ebenfalls mittels einer aus Kunststoff bestehenden Mehrzweckhülse 46 auf den einen Außenkonus bildenden Endabschnitt des aus Silkonkautschuk bestehenden Isolierkörpers 47 übertragen. Wie bei den übrigen Ausführungsbeispielen liegt die Shore-A-Härte des Silikonkautschuks zwischen 25 und 35 und die Kraft, mit welcher der Isolierkörper 47 an die Innenwand der nicht dargestellten Steckbuchse gepreßt wird, liegt, wie bei den anderen Ausführungsbeispielen, je nach Steckergröße und Kabeldurchmesser zwischen 18 N/cm² und 50 N/cm². Die Mehrzweckhülse 40 verhindert ferner mittels einer radial nach außen überstehenden Materialpartie 48, die einen Flansch der Kappe 49 hintergreift, daß die Schraubendruckfeder 45 auch dann gespannt bleibt, wenn der Kabelstecker 50 nicht in eine Steckbuchse eingesetzt ist.

Die Kappe 49 ist bei diesem Ausführungsbeispiel aus zwei einander übergreifenden Abschnitten zusammengesetzt, weil in der Kappe 49 ein die Mehrzweckhülse 46 konzentrisch im Abstand umgebender Stromwandler 51 angeordnet ist, der ein elektrisches Signal erzeugt, das ein Maß für die Stärke des das Kabel durchfließenden Stromes ist.

Bei den Kabelsteckern gemäß den Fig. 1 und 2 ist die Ringelektrode, deren Signal der Betriebsspannung des Kabels proportional ist, getrennt von der auf Erdpotential liegenden Feldsteuerelektrode im Isolierkörper angeordnet. Bei dem Kabelstecker gemäß Fig. 3 bildet hingegen die Feldsteuerelektrode 52 auch die das Spannungssignal erzeugende Elektrode. Sie ist, wie bei den bereits beschriebenen Ausführungsbeispielen, durch einen Körper aus elektrisch leitfähigem Silikonkautschuk oder einer leitenden Schicht zwischen diesem Körper und dem Isolierkörper gebildet. Die Feldsteuerung durch die Feldsteuerelektrode 52 wird dadurch nicht beeinträchtigt, daß letztere nicht auf Erdpotential, sondern auf einem von der Betriebsspannung des Kabels abhängigen, höheren Potential liegt.

Bei dem in Fig. 3 dargestellten Ausführungsbeispiel ist zusätzlich zu der Feldsteuerelektrode 52 eine zweite Elektrode 53 vorhanden, die durch eine elektrisch leitende Schicht auf der Innenmantelfläche des Isolierkörpers 47 gebildet ist. Die zweite Elektrode 53 kontaktiert die leitende Schicht 54 des Kabels 55 und liegt deshalb auf Erdpotential. Auf einem Teil ihrer Länge wird die zweite Elektrode 53 von der Feldsteuerelektrode 52 konzentrisch im Abstand übergriffen. Die Feldsteuerelektrode 52 und die zweite Elektrode 53 bilden deshalb einen kapazitiven Spannungsteiler für die von der Feldsteuerelektrode 52 abnehmbare Signalspannung, wobei das Teilungsverhältnis und damit auch das Potential der Feldsteuerelektrode 52 von dem Ausmaß der Überlappung der beiden Elektroden 52 und 53 abhängt. Durch die Wahl des Ausmaßes dieser Überlappung kann deshalb die Größe des von der Feldsteuerelektrode 52 abnehmbaren Spannungssignales beeinflußt werden.

Wie Fig. 4 zeigt, kann die zweite Elektrode 56 auch so ausgebildet sein, daß die sie bildende leitende Schicht nicht nur auf der Innenseite des Isolierkörpers 57 vorgesehen ist, sondern sich über das hintere Ende des Isolierkörpers 57 auf dessen Außenmantelfläche erstreckt. Die Feldsteuerelektrode 58, welche auch das Spannungssignal liefert, greift hierbei zwischen den innen und außen liegenden Abschnitt der zweiten Elektrode 56 ein. Auch hier bestimmt das Ausmaß der Überlappung der beiden Elektroden das Teilungsverhältnis des aus beiden Elektroden gebildeten kapazitiven Spannungsteilers.

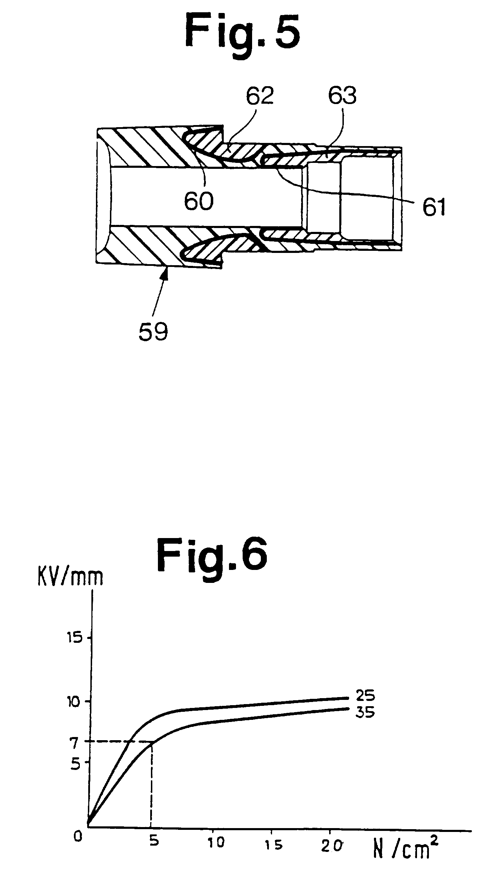

Bei dem in Fig. 5 dargestellten Ausführungsbeispiel eines Isolierkörpers 59 aus Silkonkautschuk für den erfindungsgemäßen Kabelstecker sind in den Isolierkörper 59 ebenfalls zwei elektrisch gegeneinander isolierte Elektroden eingebettet, welche je durch eine elektrisch leitende Schicht 60 und 61 eines ersten Formkörpers 62 bzw. eines zweiten Formkörpers 63 gebildet sind, wobei beide Formkörper aus Silikonkautschuk bestehen. Die beiden leitenden Schichten 60 und 61 bilden gemeinsam die Feldsteuerelektrode, von der nur der durch die Leitschicht 61 gebildete Abschnitt auf Erdpotential liegt. Deshalb kann der durch die in axialem Abstand sich anschließende, sich trichterförmige erweiternde leitende Schicht 60 gebildete Abschnitt als Signalelektrode verwendet werden. Diese Elektrodenausbildung gewährleistet eine sehr gute Feldsteuerung und ermöglicht die Lieferung eines starken und damit störunanfälligen Spannungssignales für die Anzeige oder Messung der Betriebsspannung des Kabels.

Bei allen Ausführungsbeispielen hängt die Spannungsfestigkeit der mittels des Isolierkörpers erzielbaren elektrischen Abdichtung von der Härte des Silikonkautschuks ab, aus dem der Isolierkörper besteht, sowie von der Kraft, mit welcher die konische Außenmantelfläche des Isolierkörpers an die konische Innenmantelfläche des Buchsengehäuses der Steckbuchse angepreßt wird. Fig. 6 zeigt den Zusammenhang zwischen der Spannungsfestigkeit und der Anpreßkraft für zwei unterschiedliche Shore-A-Härtewerte von Silikonkautschuk.

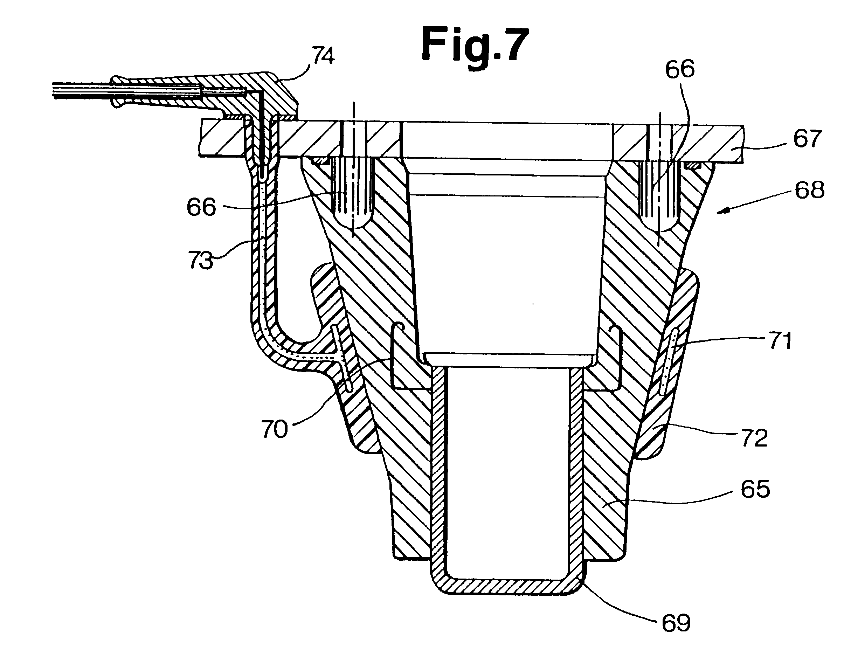

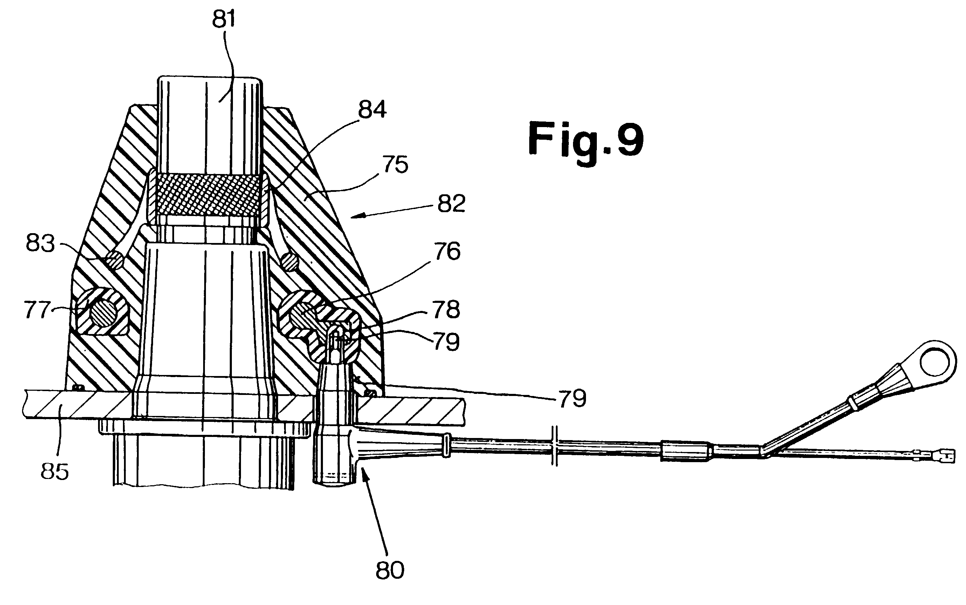

Bei dem in Fig. 7 dargestellten Ausführungsbeispiel einer Steckbuchse der erfindungsgemäßen Steckverbindungseinrichtung ist, ähnlich wie bei dem Ausführungsbeispiel gemäß Fig. 2, das aus Gießharz bestehende Buchsengehäuse 65 mit eingebetteten Gewindebuchsen 66 versehen, so daß das Buchsengehäuse 65 mittels nicht dargestellter Schrauben an einer Platte 67 befestigt werden kann, die beispielsweise die Gehäusewand eines elektrischen Gerätes bildet und mit einer Durchtrittsöffnung für den Kabelstecker versehen ist. Die Kontaktbuchse der als Ganzes mit 68 bezeichneten Steckbuchse ist mit 69 bezeichnet. An diese Kontaktbuchse 69 schließt sich die Innenkonusfläche des Buchsengehäuses 65 an, an welcher der Außenkonus des Isolierkörpers eines Kabelsteckers zum Zwecke der mechanischen und elektrischen Abdichtung unter Druck anliegt, wenn der Kabelstecker vollständig in die Steckbuchse 68 eingesetzt ist. Zum Zwecke der Feldsteuerung ist in das Buchsengehäuse 65 ein elektrisch leitender Steuerkörper 70 eingebettet, der elektrisch leitend mit der Kontaktbuchse 69 verbunden ist und den an die Kontaktbuchse 69 anschließenden Endabschnitt der Innenkonusfläche im Abstand übergreift.

Als Signalelektrode kann bei einer derartigen Steckbuchse eine der Gewindebuchsen 66 dienen, die dann natürlich nicht für die Aufnahme einer Verbindungsschraube zur Verfügung steht. Man kann aber auch, wie Fig. 7 zeigt, eine Signalelektrode 71 an der Außenseite des Buchsengehäuses 65 in einem Bereich anordnen, welcher wenigstens einen Endabschnitt der Kontaktbuchse 69 umfaßt. Die Signalelektrode 71 ist dann an die Kontaktbuchse 69 und/oder den Steuerkörper 70 kapazitiv angekoppelt, was den Vorteil bietet, daß die Höhe der Signalspannung nicht vom Durchmesser des Leiters des Kabels abhängt. Außerdem kann eine Steckbuchse 68 mit einer derartigen Signalelektrode 71 nachträglich ausgerüstet werden.

Besonders vorteilhaft ist es, die Signalelektrode 71 vollständig in einen Isolierkörper 72 einzubetten, der beispielsweise aus Silikonkautschuk besteht. Ein solcher Isolierkörper 72 vereinfacht zum einen die Festlegung der Signalelektrode 71 auf der Außenmantelfläche des Buchsengehäuses 65. Zum anderen wird durch den Isolierkörper 72 die Signalelektrode 71 zusätzlich isoliert, so daß die Isolation gegenüber der in der Regel elektrisch leitenden, auf Erdpotential liegenden Platte 67 nicht nur durch das Buchsengehäuse 65 bewirkt wird, sondern zusätzlich durch den Isolierkörper 72. Die Signalelektrode 71 ist also doppelt isoliert.

Wie Fig. 7 zeigt, ist im Ausführungsbeispiel auch die an die Signalelektrode 71 angeschlossene Verbindungsleitung 73 in das Material des Isolierkörpers 72 eingebettet. Ein Stecker 74 bildet eine lösbare Verbindung mit der Verbindungsleitung 73.

Selbstverständlich kann statt der Signalelektrode 71 oder zusätzlich zu dieser auch ein Stromsensor, beispielsweise in Form eines Ringstromwandlers, vorgesehen sein.

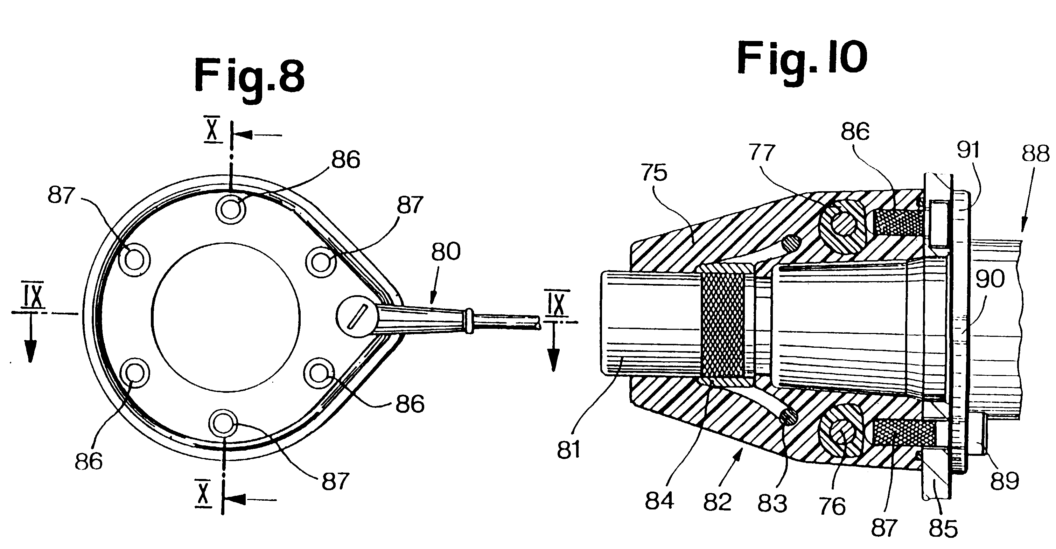

Wenn das Buchsengehäuse einer Steckbuchse aus Gießharz besteht, muß damit gerechnet werden, daß im Laufe der Zeit feine Risse im Gießharz auftreten. Sofern, wie bei dem in den Fig. 8 bis 10 dargestellten Ausführungsbeispiel, in das Buchsengehäuse 75 eine Signalelektrode 76 eingebettet ist, welche vorzugsweise die Form einer konzentrisch zum Innenraum des Buchsengehäuses 75 angeordneten Ringelektrode hat, ist es deshalb vorteilhaft, die Signalelektrode 76 in einen zusätzlichen Isolierkörper 77 einzubetten, der so ausgebildet ist, daß er allein die erforderliche Isolierung der Signalelektrode bewirken kann. Selbst ein bis zum Isolierkörper 77 durchgehender Riß im Buchsengehäuse 75 ist dann nicht störend. Sofern Wärmespannungen dadurch verhindert werden, daß man die Signalelektrode 76 nicht aus Metall, sondern einem halbleitenden Gießharz herstellt, kann man für den Isolierkörper 77 ebenfalls ein Gießharz verwenden.

Wie Fig. 9 zeigt, weist die ringförmige Signalelektrode 76 vorzugsweise an einer Stelle ihres Umfanges einen radial abstehenden Fortsatz 78 auf, der ebenfalls in den Isolierkörper 77 eingebettet und mit einer Steckbuchse 79 versehen ist, in die ein Verbindungsstecker 80 eingesteckt werden kann, welcher wie der erfindungsgemäße Kabelstecker den Zugang zur Steckbuchse 79 mechanisch und elektrisch dicht verschließt.

Die Signalelektrode 76 ist im Buchsengehäuse 75 vorzugsweise so angeordnet, daß sie kapazitiv an eine Hilfselektrode 83 angekoppelt ist, welche durch die Kontaktbuchse 81 der als Ganzes mit 82 bezeichneten Steckbuchse gebildet oder mit dieser galvanisch verbunden ist. Im Ausführungsbeispiel ist die Hilfselektrode 83, die ebenfalls in dem Isolierkörper 77 eingebettet ist, durch einen elektrisch leitenden Ring gebildet, der über im wesentlichen axial verlaufende Arme mit einer die Kontaktbuchse 81 umgreifenden Hülse 84 verbunden ist. Dabei ist der Abstand zwischen der Hilfselektrode 83 und der Signalelektrode 76 deutlich kleiner als zwischen letzterer und einer metallischen, auf Erdpotential liegenden Wand 85, an welcher die Steckbuchse 82 festgelegt ist. Gegen die Hilfselektrode 83 hin ist die Dikke des Isolierkörpers 77 mindestens so groß, daß der Isolierkörper 77 hier dem 1,5-fachen Wert der Nennspannung standhält.

Gewindebuchsen 86, die in das Buchsengehäuse 75 eingebettet sind, nehmen Verbindungsschrauben auf, mittels deren das Buchsengehäuse 75 mit der Wand 85 verbunden sind. Gegenüber den Gewindebuchsen 86 in Umfangsrichtung versetzt angeordnete Gewindebuchsen 87 dienen der Aufnahme von Schrauben 89, mittels deren der Kabelstecker 88 im Bereich seines Flansches 91 mit der Wand 85 und der Steckbuchse 79 verbindbar ist. Zusätzlich zu den auf die Gewindebuchse 87 ausgerichteten Durchgangsbohrungen kann der Flansch 91 mit gegenüber diesen Durchgangsbohrungen versetzt und symmetrisch zur Längsachse des Kabelsteckers 88 angeordneten Gewindebohrungen 90 versehen sein. In diese Gewindebohrungen 90 können Schrauben eingedreht werden, mittels deren der Flansch 91 von der Wand 85 weggedrückt werden kann. Hierdurch kann das Herausziehen des Kabelsteckers 88 aus der Steckbuchse 82 im Bedarfsfall erleichtert werden.

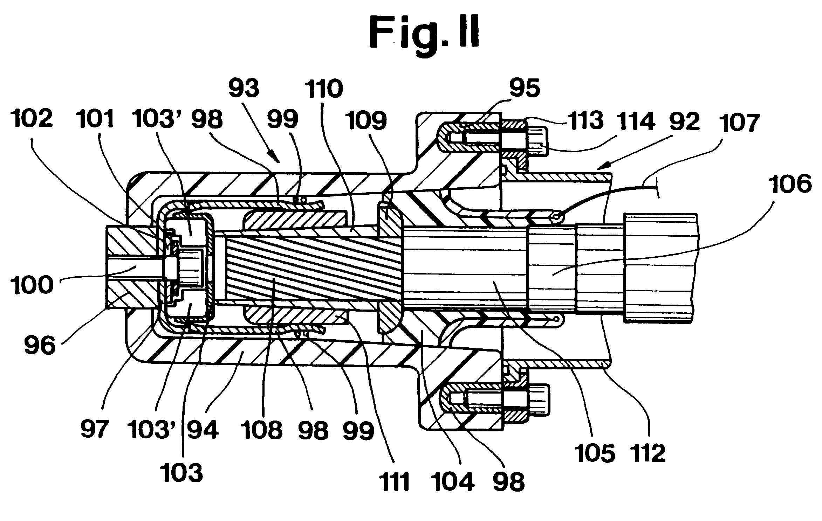

Das in Fig. 11 dargestellte Ausführungsbeispiel der erfindungsgemäßen Steckverbindungseinrichtung besteht ebenfalls aus einem als Ganzes mit 92 bezeichneten Kabelstecker und einer als Ganzes mit 93 bezeichneten Steckbuchse. Letztere weist ein becherförmiges Buchsengehäuse 94 aus Gießharz auf, das eine ähnliche Form wie das Buchsengehäuse 4 des Ausführungsbeispiels gemäß Fig. 2 hat. Im Bereich seines offenen Endes ist ein radial nach außen überstehender Ringflansch angeformt, in welchen Gewindebuchsen 95 eingebettet sind. Abweichend von dem Buchsengehäuse 4 ist bei dem Buchsengehäuse 94 die Innenwand nur etwa auf der halben Länge, beginnend am offenen Ende, konisch ausgebildet, wobei der Konuswinkel bei etwa 3° liegt. An diesen konischen Abschnitt schließt sich bis zum Boden des Buchsengehäuses 94 ein zylindrischer Abschnitt an. Eine elektrisch leitende Beschichtung der Innenwand bedeckt den Boden, den zylindrischen Teil und eine Ringzone des sich anschließenden konischen Teils der Innenwand.

Den Boden des Buchsengehäuses 94 durchdringt ein elektrisch gut leitender Verbindungskörper 96, an dessen im Inneren des Buchsengehäuses 94 liegender, ebener Stirnfläche der Boden 97 einer topfförmigen Kontaktbuchse anliegt, deren im wesentlichen zylindrische Mantelfläche durch einstückig mit dem Boden 97 ausgebildete, radial federnde Kontaktzungen 98 gebildet ist. Im Bereich ihres leicht nach innen gewölbten Endabschnittes werden die Kontaktzungen 98 von einer vorgespannten Ringfeder 99 umfaßt, welche auf die Kontaktzungen 98 eine radial nach innen gerichtete Federkraft ausübt. Der Abstand der Kontaktzungen 98 von der Innenmantelfläche des Buchsengehäuses 94 ist sehr gering und auch die Dicke der Kontaktzungen 98 ist gering, so daß der Innendurchmesser des von den Kontaktzungen 98 gebildeten Hohlkörpers ein Maximum im Hinblick auf den Innendurchmesser des Buchsengehäuses 94 hat. In Verbindung mit den elektrisch hoch belastbaren Kontaktzungen 98 und dem von diesen gebildeten Kontakten ist deshalb die Steckbuchse 93 für die Aufnahme eines Kabelsteckers geeignet, der einen wesentlich höheren Strom zu führen vermag als beispielsweise der Kabelstecker 1 des Ausführungsbeispiels gemäß Fig. 1 bei gleichen Abmessungen des Buchsengehäuses.

Der Boden 97 wird mittels einer Schraube 100 unter Zwischenlage einer Federscheibe 101 und einer ringförmigen Druckplatte 102 an die Stirnfläche des Verbindungskörpers 96 angepreßt, in den die Schraube 100 eingreift.

Eine Kunststoffkappe 103 mit einer ebenen, parallel zum Boden 97 liegenden Basis und einem hochgestellten, gegen den Boden 97 weisenden Rand übergreift, wie Fig. 11 zeigt, den Kopf der Schraube 100 sowie die Federscheibe 101 und die Druckplatte 102, wobei radial nach innen abstehende Rippen 103' die Kunststoffkappe 103 bezüglich der Schraube 100 und der Federscheibe 101 sowie der Druckplatte 102 zentrieren. Nach außen vom hochgestellten Rand abstehende Haken hintergreifen nach innen vorstehende Nasen der Kontaktzungen 98 und halten dadurch die Rippen 103' in Anlage am Boden 97. Die Kunststoffkappe 103 verbindet die Schraube 100, deren Kopf durch ein zentrales Loch in der Basis zugänglich ist, sowie die Federscheibe 101 und die Druckplatte 102 unverlierbar mit der Kontaktbuchse, wodurch das Verbinden der Kontaktbuchse mit dem Verbindungskörper 96 mittels der Schraube 100 wesentlich vereinfacht wird.

Die Steckbuchse 93 kann beispielsweise wie die in Fig. 1 dargestellte Steckbuchse 2 eine Öffnung in der Wand eines Gerätes durchdringen und mit dieser Wand fest und dicht verbunden werden.

Der Kabelstecker 92 weist einen aus Siliconkautschuk bestehenden Isolierkörper 104 auf, der mit Vorspannung an der freigelegten Kunststoffisolation 105 sowie an der die Kunststoffisolation 105 umgebenden Leitschicht 106 anliegt. Auf einem Teil seiner Länge, beginnend von dem gegen das Kabelende weisenden Ende, hat der Isolierkörper 104 eine an die konische Innenmantelfläche des Buchsengehäuses 94 angepaßte konische Außenmantelfläche, die elektrisch und mechanisch dicht an der Innenwand des Buchsengehäuses 94 anliegt, wenn der Kabelstecker 92 vollständig in die Steckbuchse 93 eingesteckt ist, wie dies Fig. 11 zeigt. An diesen außen konischen Abschnitt schließt sich ein außen zylindrischer Abschnitt an, der aus dem Mittelabschnitt und dem über diesen gelegten Endabschnitt besteht. Die aneinander anliegenden Mantelflächen des Mittelabschnittes und des diesen übergreifenden Endabschnittes sind elektrisch leitend ausgebildet zur Bildung einer Elektrode, welche sowohl der Feldsteuerung dient als auch der kapazitiven Ankoppelung an die Seele des Kabels zum Zwecke der Spannungmessung oder Spannungsanzeige. Dank der Vorspannung, mit der der Endabschnitt den Mittelabschnitt übergreift, genügt zur elektrisch leitenden Verbindung der Elektrode mit einer Signalleitung 107, das Ende der Signalleitung zwischen den Mittelabschnitt und den Endabschnitt zu legen. Es wird dann mit der erforderlichen Kontaktkraft an die Elektrode angepreßt. Selbstverständlich würde es auch genügen, nur den Mittelabschnitt oder nur den Endabschnitt mit der leitenden Schicht zu versehen.

Über den abisolierten Endabschnitt 108 der Kabelseele ist eine metallisch, zum Isolierkörper 104 hin abgerundete Druckscheibe 109 aus Metall geschoben, die am freien Ende der Kunststoffisolation 105 anliegt und an welcher sich der Isolierkörper 104 abstützt. An der gegen das freie Ende des Endabschnittes 108 weisenden Stirnfläche liegt das eine Ende einer in Längsrichtung mehrfach geschlitzten, außen konischen und elektrisch gut leitenden Klemmhülse 110 an, deren anderes Ende etwas über den Endabschnitt 108 übersteht und an der Basis der Kunststoffkappe 103 Anschlag findet, wenn der Kabelstecker 92 vollständig in die Steckbuchse 93 eingesteckt ist. Auf die Klemmhülse 110 ist ein innen konischer und außen zylindrischer Kontaktkörper 111 aufgepreßt, der einerseits die für eine hohe Strombelastbarkeit erforderliche radiale Druckbeanspruchung der Klemmhülse 110 und der Kabelseele erzeugt und andererseits die mit den Kontaktzungen 98 zusammenwirkende, hochbelastbare Kontaktfläche des Kabelsteckers 92 bildet.

Ein nur unvollständig dargestelltes, im Ausführungsbeispiel aus Metall bestehendes Kabelsteckergehäuse 112 umgibt das Kabel auf einem Stück seiner Länge und ist an dem in Anlage an das Buchsengehäuse 94 zubringenden Ende mit einem radial nach außen überstehenden Verbindungsflansch versehen, den ein Ringkörper 113 übergreift, der mittels Schrauben 114, welche in die Gewindebuchsen 95 eingreifen, mit der Steckerbuchse 93 verbindbar ist.

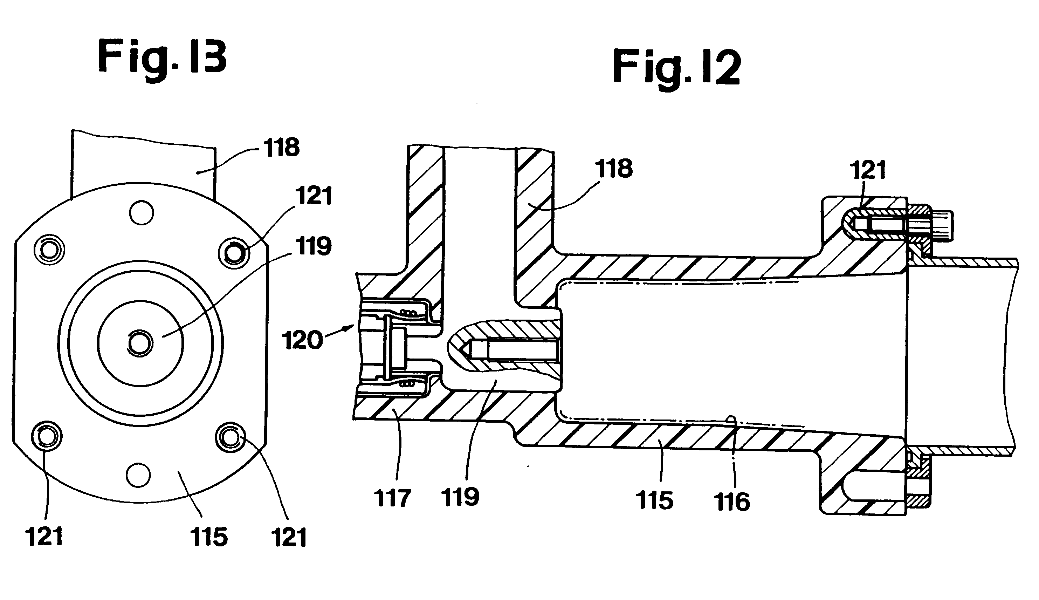

Das in den Fig. 12 und 13 dargestellte Buchsengehäuse 115 einer Steckerbuchse zur Aufnahme eines Kabelsteckers ist weitgehend wie das Buchsengehäuse 94 ausgebildet und für die Aufnahme eines Kontaktsystems vorgesehen, das wie bei dem Ausführungsbeispiel gemäß Fig. 11 ausgebildet ist. Daher ist der an den Boden des Buchsengehäuses 115 anschließende Abschnitt seiner Innenmantelfläche zylindrisch ausgebildet und mit einer Leitschicht 116 versehen, die auf dem Potential der Kontaktbuchse liegt und sich bis in den konischen Abschnitt hinein erstreckt.

Abweichend von dem Buchsengehäuse 94 des Ausführungsbeispiels gemäß Fig. 11 sind an den den Boden bildenden Teil gleichachsig und im rechten Winkel zwei hohlzylindrische Teile 117 bzw. 118 angeformt, in denen Arme eines dem Verbindungskörper 96 entsprechenden Verbindungskörpers 119 liegen. Der im gleichachsigen hohlzylindrischen Teil 117 liegende Arm bildet den Träger eines Kontaktsystems 120 einer Steckverbindung.

Wie Fig. 13 zeigt, ist der Flanschteil des Buchsengehäuses 115, in den Gewindebuchsen 121 eingebettet sind, auf einander gegenüberliegenden Seiten parallel zu dem im hohlzylindrischen Teil 118 liegenden Arm abgeflacht, wodurch der Platzbedarf des Buchsengehäuses 115 wesentlich reduziert ist.

**Patentansprüche**

1.  Steckverbindungseinrichtung mit einem in die Steckbuchse einsteckbaren Kabelstecker für elektrische Kabel eines Hochspannungsenergieversorgungsnetzes, wobei der Kabelstecker einen auf dem abisolierten Endabschnitt des Kabels festlegbaren Kontaktkörper und einen auf die Kabelisolation aufschiebbaren Dichtungskörper aus Silikonkautschuk aufweist, der einen sich gegen den Kontaktkörper hin verjüngenden Außenkonus bildet, welcher elektrisch und mechanisch dicht an den einen Innenkonus bildenden Abschnitt der Innenwand der Steckbuchse anpreßbar ist, dadurch gekennzeichnet, daß der Silikonkautschuk eine Shore-A-Härte zwischen 20 und 35, vorzugsweise zwischen 25 und 30, hat und der Druck, mit dem der Dichtungskörper (18; 41; 47; 59; 104) gegen die Innenwand der Steckbuchse (2; 30; 68; 82; 94; 115) gepreßt wird, zwischen 5 und 50 N/cm$^2$, vorzugsweise zwischen 5 und 20 N/cm$^2$, liegt.

2.  Steckverbindungseinrichtung nach Anspruch 1, dadurch gekennzeichnet, daß der Außenkonus des Dichtungskörpers (18; 41; 47; 59; 104) einen Konuswinkel im Bereich zwischen 2° und 8°, vorzugsweise im Bereich zwischen 2° und 3° hat.

3.  Steckverbindungseinrichtung nach Anspruch 1 oder 2, dadurch gekennzeichnet, daß der Konuswinkel ($\beta$) der Innenwand der Steckbuchse (2; 36; 68; 82; 94; 115) und der Konuswinkel ($\alpha$) der konischen Außenmantelfläche des Dichtungskörpers (18; 41; 47; 59; 104) die Definition

$$\alpha = \beta + x$$

erfüllen, wobei der Wert x im Bereich zwischen -1° und +2° liegt.

4.  Steckverbindungseinrichtung nach einem der Ansprüche 1 bis 3, dadurch gekennzeichnet, daß der Isolierkörper (104) einen außen zylindrischen Abschnitt aufweist, der sich an den Abschnitt anschließt, welcher eine konische Außenmantelfläche hat, und aus einem Mittelteil sowie einem Endteil besteht, wobei letzterer den Mittelteil überlappt und in radialer Richtung vorgespannt ist.

5. Steckverbindungseinrichtung nach Anspruch 4, dadurch gekennzeichnet, daß die Außenfläche des Mittelteils und/oder die Innenfläche des überlappenden Endteils elektrisch leitend ist und daß eine Signalleitung (107) kontaktbildend zwischen dem Mittelteil und dem überlappenden Endteil eingeklemmt ist.

6. Steckverbindungseinrichtung nach einem der Ansprüche 1 bis 5, dadurch gekennzeichnet, daß das Gehäuse (94) der Buchse (93) einen zylindrischen Innenmantelabschnitt hat zwischen dem Abschnitt, welcher den Innenkonus bildet, und einem Boden des Gehäuses (94).

7. Steckverbindungseinrichtung nach Anspruch 6, dadurch gekennzeichnet, daß die Innenfläche des Gehäuses (115) wenigstens einen zylindrischen Abschnitt mit einer elektrisch leitenden Schicht (116) aufweist, die sich auf dem Potential des Kontaktes (98) der Steckbuchse (93) befindet.

8. Steckverbindungseinrichtung nach einem der Ansprüche 1 bis 7, dadurch gekennzeichnet, daß eine topfförmige Kontakthülse im Gehäuse (94) der Steckbuchse (93), in welche das Kontaktelement (111) des Kabelsteckers (92) einsetzbar ist, eine im wesentlichen zylindrische Wand aufweist, die durch radial federnde Kontaktzungen (98) gebildet ist, daß die Kontakthülse einen Außendurchmesser hat, der nur wenig kleiner ist als der Innendurchmesser des Gehäuses (94) der Steckbuchse in der die Kontaktbuchse umgebenden Zone, und daß das Kontaktelement (111) des Kabelsteckers ein nichtfedernder Körper ist.

9. Steckverbindungseinrichtung nach Anspruch 8, dadurch gekennzeichnet, daß die Kontaktbuchse im Bereich des freien Endes der Kontaktzungen (98) von einer vorgespannten Ringfeder (99) umgeben ist.

10. Steckverbindungseinrichtung nach Anspruch 8 oder 9, dadurch gekennzeichnet, daß der zylindrische Abschnitt der Innenwand des Gehäuses (94) der Steckbuchse (93) die aus den Kontaktzungen gebildete Kontaktbuchse umgibt und daß die in radialer Richtung gemessene Dicke der Kontaktzungen (98) klein ist, so daß der Innendurchmesser der Kontaktbuchse ein Maximum aufweist im Hinblick auf den Innendurchmesser des Gehäuses (94) der Steckbuchse (93).

11. Steckverbindungseinrichtung nach einem der Ansprüche 8 bis 10, dadurch gekennzeichnet, daß der Boden der topfförmigen Kontaktbuchse fest mit dem Gehäuse (94) der Steckbuchse (93) mittels einer Schraube (100) verbunden ist, welche verliersicher mit der Kontaktbuchse verbunden ist.

12. Steckverbindungseinrichtung nach Anspruch 11, dadurch gekennzeichnet, daß die Schraube (100) mit der Kontaktbuchse mittels einer Kappe (103) verbunden ist, die den Kopf der Schraube (100) übergreift, und daß ein hochgestellter Rand der Kappe (103) mit Haken vorgesehen ist, die nach außen weisen und nach innen vorspringende Nasen der Kontaktzungen (98) hintergreifen.

13. Steckverbindungseinrichtung nach einem der Ansprüche 1 bis 12, dadurch gekennzeichnet, daß der Kabelstecker ein Gehäuse (112) aufweist, das an seinem vorderen Ende mit einem radial nach außen überstehenden Verbindungsflansch versehen ist, der bei hergestellter Steckverbindung das Gehäuse der Steckbuchse berührt und von einem ringförmigen Element (113) übergriffen wird, das mittels Schrauben mit dem Gehäuse (112) verbindbar ist zum Zwecke der Verbindung des Gehäuses (112) des Kabelsteckers mit der Steckbuchse.

14. Steckverbindungseinrichtung nach einem der Ansprüche 1 bis 13, dadurch gekennzeichnet, daß das Gehäuse (115) der Steckbuchse mit einem Flansch versehen ist, der auf einander gegenüberliegenden Seiten parallel zueinander verlaufende Abflachungen aufweist.

15. Steckverbindungseinrichtung nach einem der Ansprüche 1 bis 14, dadurch gekennzeichnet, daß das Gehäuse des Kabelsteckers (88) einen Flansch (91) aufweist, der mit Durchgangsbohrungen für Schrauben (89) versehen ist, mittels deren der Flansch (91) mit der Steckbuchse (82) verbindbar ist, sowie Gewindebohrungen (90) aufweist, die gegenüber den Durchgangsbohrungen versetzt sind und der Aufnahme von Schrauben dienen, mittels deren der Flansch (91) vom Gehäuse (82) der Steckbuchse abdrückbar ist.

**Claims**

1. Plug-in connection device with a cable plug which can be inserted in a socket, for electrical cables of a high-tension energy supply network, in which the cable plug has a contact body which can be fixed to the bared end portion of the cable and a sealing body of silicone rubber which can be pushed onto the cable insulation and which forms an external cone tapering inwardly towards the contact body and can be pressed in an electrically and mechanically leakproof manner against the portion of the internal wall of the socket which forms an internal cone, characterized in that the silicone rubber has a Shore A hardness of between 20 and 35, preferably between 25 and 30 and the pressure with which the sealing body (18; 41; 47; 59; 104) is pressed against the internal wall of the plug socket (2; 30; 68; 82; 94; 115) is between 5 and 50 N/cm², preferably between 5 and 20 N/cm².

2. Plug-in connection device according to Claim 1, characterized in that the external cone of the sealing body (18; 41; 47; 59; 104) has a cone angle in the region between 2° and 8°, preferably in the region between 2° and 3°.

3. Plug-in connection device according to Claim 1 or Claim 2, characterized in that the cone angle ($\beta$) of the internal wall of the socket (2; 36, 68, 82, 94, 115) and the cone angle ($\alpha$) of the conical external curved surface of the sealing body (18; 41; 47; 59; 104) fulfil the definition

$$\alpha = \beta + x$$

in which the value x is in the region between -1° and +2°.

4. Plug-in connection device according to any one of Claims 1 to 3, characterized in that the insulation body (104) has an outer cylindrical portion which is connected to the portion having a conical external curved surface and consists of a central portion as well as an end portion, the latter overlapping the central portion and being prestressed in a radial direction.

5. Plug-in connection device according to Claim 4, characterized in that the external surface of the central portion and/or the internal surface of the overlapping end portion is electrically conductive, and in that a signal line (107) is clamped between the central portion and the overlapping end portion so as to form a contact.

6. Plug-in connection device according to any one of Claims 1 to 5, characterized in that the housing (94) of the socket (93) has a cylindrical internal curved surface portion between the portion which forms the internal cone and a base of the housing (94).

7. Plug-in connection device according to Claim 6, characterized in that the internal surface of the housing (115) has at least one cylindrical portion with an electrically conductive layer (116) which is at the potential of the contact (98) of the plug socket (93).

8. Plug-in connection device according to any one of Claims 1 to 7, characterized in that a pot-shaped contact socket in the housing (94) of the plug socket (93), in which the contact element (111) of the cable plug (92) can be inserted, has a substantially cylindrical wall which is formed by radially resilient contact tongues (98), in that the contact socket has an outside diameter which is only slightly smaller than the inside diameter of the housing (94) of the plug socket in the region surrounding the contact socket, and in that the contact element (111) of the cable plug is a non-resilient body.

9. Plug-in connection device according to Claim 8, characterized in that the contact socket is surrounded by a prestressed annular spring (99) in the region of the free end of the contact tongues (98).

10. Plug-in connection device according to Claim 8 or Claim 9, characterized in that the cylindrical portion of the internal wall of the housing (94) of the plug socket (93) surrounds the contact socket formed by the contact tongues, and in that the thickness of the contact tongues (98) measured in a radial direction is small so that the contact socket has a maximum inside diameter in view of the inside diameter of the housing (94) of the plug socket (93).

11. Plug-in connection device according to any one of Claims 8 to 10, characterized in that the base of the pot-shaped contact socket is connected firmly to the housing (94) of the plug socket (93) by means of a screw (100) which is connected to the contact socket in a captive manner.

12. Plug-in connection device according to Claim 11, characterized in that the screw (100) is connected to the contact socket by means of a cap (103) which covers the head of the screw (100), and in that a turned-up edge of the cap (103) is provided with hooks which are directed outwardly and engage behind inwardly-projecting catches of the contact tongues (98).

13. Plug-in connection device according to any one of Claims 1 to 12, characterized in that the cable plug has a housing (112) which is provided, at its front end, with a radially outwardly-projecting connection flange which, when the plug-in connection is formed, contacts the housing of the plug socket and is covered by an annular element (113) which is connectible to the housing (112) by means of screws in order to connect the housing (112) of the cable plug to the plug socket.

**14.** Plug-in connection device according to any one of Claims 1 to 13, characterized in that the housing (115) of the plug socket is provided with a flange which has flat portions extending parallel to one another on opposite sides.

**15.** Plug-in connection device according to any one of Claims 1 to 14, characterized in that the housing of the cable plug (88) has a flange (91) which is provided with through holes for screws (89) by means of which the flange (91) can be connected to the plug socket (82), and has threaded holes (90) which are offset relative to the through holes and serve to house screws by means of which the flange (91) can be lifted from the housing (82) of the plug socket.

## Revendications

**1.** Dispositif connecteur comportant une fiche mâle de câble, qui peut être enfiché dans la douille d'enfichage, pour un câble électrique d'un réseau d'alimentation en énergie à haute tension, la fiche mâle du câble possédant un corps de contact, qui peut être fixé sur la section d'extrémité dénudée du câble, et un corps d'étanchéité, pouvant être emmanché sur l'isolant du câble et formé par du caoutchouc silicone et qui forme un cône extérieur, qui se rétrécit en direction du corps de contact et qui peut être serré, d'une manière étanche du point de vue électrique et mécanique, contre la section, qui forme un cône intérieur, de la paroi intérieure de la douille d'enfichage, caractérisé en ce que le caoutchouc silicone possède une durée Shore A comprise entre 20 et 35 et de préférence entre 25 et 30, et la pression, avec laquelle le corps d'étanchéité (18;41;47;59;104) est repoussé contre la paroi intérieure de la douille d'enfichage (2;30;68;82;94; 115), est comprise entre 5 et 50 N/cm$^2$ et de préférence entre 5 et 20 N/cm$^2$.

**2.** Dispositif connecteur selon la revendication 1, caractérisé en ce que le cône extérieur du corps d'étanchéité (18;41;47;59;104) possède un angle situé dans la gamme comprise entre 2° et 8° et de préférence dans la gamme comprise entre 2° et 3°.

**3.** Dispositif connecteur selon la revendication 1 ou 2, caractérisé en ce que l'angle (β) de cône de la paroi intérieure de la douille d'enfichage (2;36;68;82;94; 115) et l'angle (α) du cône de la surface enveloppe extérieure conique du corps d'étanchéité (18;41;47; 59;104) satisfont à la définition

$$\alpha = \beta + x$$

la valeur x étant située dans la gamme comprise entre -1° et +2°.

**4.** Dispositif connecteur selon l'une des revendications 1 à 3, caractérisé en ce que le corps isolant (104) possède une section cylindrique extérieure, qui se raccorde à la section qui possède une surface enveloppe extérieure conique, et est constituée par une partie médiane ainsi qu'une partie d'extrémité, cette dernière chevauchant la partie médiane et étant précontrainte dans la direction radiale.

**5.** Dispositif connecteur selon la revendication 4, caractérisé en ce que la surface extérieure de la partie médiane et/ou la surface intérieure de la partie d'extrémité en chevauchement sont électriquement conductrices et qu'une ligne de transmission de signaux (107) est serrée, de manière à établir un contact, entre la partie médiane et la partie d'extrémité en chevauchement.

**6.** Dispositif connecteur selon l'une des revendications 1 à 5, caractérisé en ce que le boîtier (94) de la douille (93) possède une section d'enveloppe intérieure cylindrique entre la section, qui forme le cône intérieur, et un fond du boîtier (94).

**7.** Dispositif connecteur selon la revendication 6, caractérisé en ce que la surface intérieure du boîtier (115) possède au moins une section cylindrique comportant une couche électriquement conductrice (116), qui est placée au potentiel du contact (98) de la douille d'enfichage (93).

**8.** Dispositif connecteur selon l'une des revendications 1 à 7, caractérisé en ce qu'une douille de contact en forme de pot possède, dans le boîtier (94) de la douille d'enfichage (93), dans laquelle l'élément de contact (111) de la fiche mâle (92) du câble peut être inséré, une paroi essentiellement cylindrique, qui est formée par des languettes de contact (98), qui sont élastiques radialement, que la douille de contact possède un diamètre extérieur, qui est seulement légèrement inférieur au diamètre intérieur du boîtier (94) de la douille d'enfichage dans la zone qui entoure la douille de contact, et que l'élément de contact (111) de la fiche mâle du câble est un corps non élastique.

**9.** Dispositif connecteur selon la revendication 8, caractérisé en ce que la douille de contact est entourée, dans la zone de l'extrémité libre des languettes de contact (98), par un ressort annulaire précontraint (99).

**10.** Dispositif connecteur selon la revendication 8 ou 9, caractérisé en ce que la section cylindrique de la paroi intérieure du boîtier (94) de la douille d'enfichage (93) entoure la douille de contact formée par les languettes de contact, et que l'épaisseur, mesurée dans la direction radiale, des languettes de contact (98) est faible, de sorte que le diamètre intérieur de la douille de contact possède un maximum compte tenu du diamètre intérieur du boîtier (94) de la douille d'enfichage (93).

11. Dispositif connecteur selon l'une des revendications 8 à 10, caractérisé en ce que le fond de la douille de contact en forme de pot est relié de façon fixe au boîtier (94) de la douille d'enfichage (93) à l'aide d'une vis (100), qui est reliée d'une manière imperdable à la douille de contact.

12. Dispositif connecteur selon la revendication 11, caractérisé en ce que la vis (100) est reliée à la douille de contact au moyen d'un capuchon (103), qui s'engage par-dessus la tête de la vis (100), et qu'il est prévu un bord relevé du capuchon (103) pourvu de crochets qui sont tournés vers l'extérieur et s'engagent derrière des becs, qui font saillie intérieurement, des languettes de contact (98).

13. Dispositif connecteur selon l'une des revendications 1 à 12, caractérisé en ce que la fiche mâle du câble possède un boîtier (112), qui est pourvu, sur son extrémité avant, d'une bride de liaison qui fait saillie radialement vers l'extérieur et qui, une fois que le connecteur est fabriqué, est en contact avec le boîtier de la douille d'enfichage et par-dessus laquelle s'engage un élément annulaire (113), qui peut être relié à l'aide de vis au boîtier (112) pour relier le boîtier (112) de la fiche mâle du câble à la douille d'enfichage.

14. Dispositif connecteur selon l'une des revendications 1 à 13, caractérisé en ce que le boîtier (115) de la douille d'affichage est pourvu d'une bride, qui possède, sur des côtés opposés, des méplats parallèles.

15. Dispositif connecteur selon l'une des revendications 1 à 14, caractérisé en ce que le boîtier de la fiche mâle (88) du câble comporte une bride (91), qui comporte des perçages traversants pour des vis (89) et à l'aide desquels la bride (91) peut être reliée à la douille d'enfichage (82), et des perçages taraudés (90), qui sont décalés par rapport aux perçages traversants et servent à loger des vis, à l'aide desquelles la bride (91) peut être écarté du boîtier (82) de la douille d'enfichage.

Fig.I

# Fig.2

# Fig.3

# Fig.4

EP 0 671 061 B1

# Fig. 5

# Fig.6

# Fig.7

**Fig.9**

EP 0 671 061 B1

# Fig.8

# Fig.10

EP 0 671 061 B1

# Fig. II

EP 0 671 061 B1

# Fig. 13

# Fig. 12

EP 0 671 061 B1